# NEW EUROPEAN PATENT SPECIFICATION

(11) **EP 1 888 353 B2**
(45) Date of publication and mention of the opposition decision: **21.09.2016**
(45) Mention of the grant of the patent: 06.08.2008
(21) Application number: 06780605.9
(22) Date of filing: 26.07.2006
(51) Int. Cl.: B60C 27/18

(54) **ANTISKID DEVICE FOR VEHICLES**
ANTRIEBSSCHLUPFREGELUNG FÜR FAHRZEUGE
DISPOSITIF D'ANTIDERAPAGE POUR VEHICULES

(30) Priority: 06.10.2005 IT BS20050114
(43) Date of publication of application: 20.02.2008
(73) Proprietor: Agripool S.R.L., 25015 Desenzano (IT)
(72) Inventor: MARITANO Riccardo, 25015 DESENZANO DEL GARDA (BS) (IT)
(74) Representative: Tirloni, Bartolomeo
(86) International application number: PCT/IT2006/000579
(87) International publication number: WO 2007/039923

(56) References cited:
- EP-A1- 1 577 428
- WO-A-00/59745
- DE-A1- 2 355 291
- US-A- 1 342 753
- US-A- 3 335 776

## Description

The aim of the present invention is an antiskid device for vehicles and, in particular, an antiskid device based on the coating of the tire tread with a textile element.

The antiskid devices for vehicles are normally used for increasing the friction between the wheels of a vehicle and the surface on which they roll whenever the adhesion is reduced and namely, for example, in winter conditions due to snow or ice, on particularly muddy grounds, on gravel or sand.

The tire antiskid devices based on the coating of the tread with a textile element have been known since long.

More particularly, such devices are equipped with a belt, suitable for surrounding the tire tread, which presents expansions which can be carried out both with its own material and with a different one, associated with a resilient or metal element for its fixing to the wheel.

It is well known that for the belt fabrics with a flat construction are used, possibly coated with a spreading or with abrasive material for increasing the effectiveness and the service life.

Patent document WO 00/59745 describes a device to be fitted on a vehicle wheel in order to increase the friction between the wheel and the road surface during winter conditions, comprising a belt that can encircle the tread of the wheel and be held in place by means of flexible inner and outer side portions. The belt can be made substantially of a woven polyamide material. Patent document US 3,335,776 which discloses an antiskid device according to the preamble of claim 1, describes a traction device for tires consisting of a lightweight long flexible strip of fabric coated on at least a side with a pressure-sensitive adhesive, said strip of fabric being comprised of woven fibers.

The known devices present however some drawbacks.

First of all, the antiskid action is exclusively assigned to the adhesion, or to the greatest friction coefficient of the fabric with respect to the one of the tire compound. In this way, in the most difficult situations, the effectiveness of the device action can be limited and, therefore, not to lead to the desired results.

Furthermore, the structure of the fabrics currently used makes the devices very stable from the dimension point of view, that it not resilient. In this way, during the adjustment to the different dimensions of the tires, wrinkles and crimps on the rolling surface are formed, which, besides decreasing the internal adhesion between tire and device, form concentration points of the stresses and therefore of a higher wear, which limit the service life thereof. In fact, also following to a reduced use, such devices tend, for example, to fray themselves.

In this situation, the technical task placed at the base of the present invention is to obviate to the drawbacks above mentioned.

Therefore, an aim of the present invention is to suggest an antiskid device for vehicles which offers a good alternative, both in terms of effectiveness and safety, to the conventional snow chains, considering that in many countries, in order to avoid damages to the feather edge, they are forbidden, or that they can not be mounted on some vehicles, such as sports-cars or those with rims of a very high diameter.

Still an aim of the invention is to present an antiskid device for vehicles capable of carrying out an adequate antiskid action so as to be able to represent, for the vehicle's driver, a safety instrument to be housed in the vehicle itself.

It is also an aim of the present invention to show an antiskid device for vehicles which has a remarkably long service life.

Finally, a further aim of the invention is an antiskid device for vehicles which ensures an adequate comfort in the driving and which is manageable, easy to use and transport, simple to carry out and with a limited cost.

These and other objects, which will better result during the following description, are attained, according to the present invention, by an antiskid device for vehicles according to the appended claims.

It is now reported, by way of indicative and not limiting example, the description of a preferred but not exclusive embodiment of the invention. Moreover, the invention is more particularly described with the help of the following drawings:
- figure 1 shows a first perspective side view of a device according to the invention mounted on a wheel of a vehicle;
- figure 2 shows a second perspective side view of the device of figure 1;
- figure 3 shows a section of the device of figure 1 and
- figure 4 shows a diagrammatic representation of the fabric for carrying out the device portion of figure 1 contacting the tire tread.

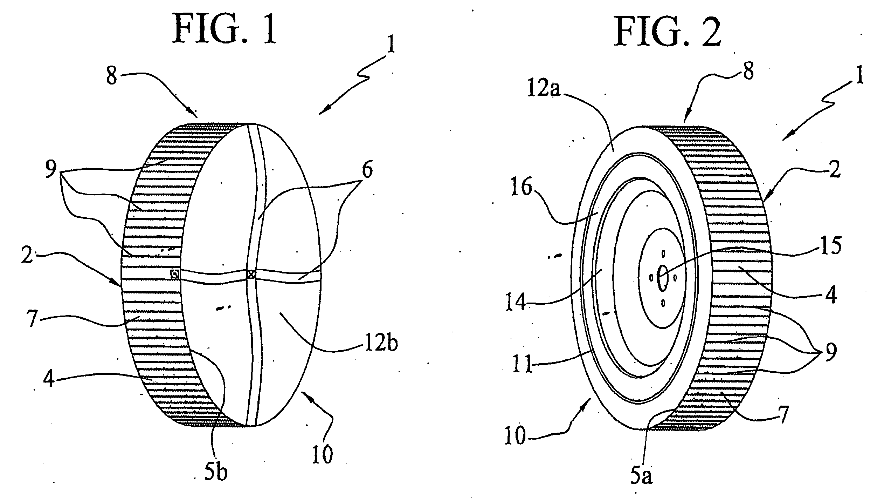

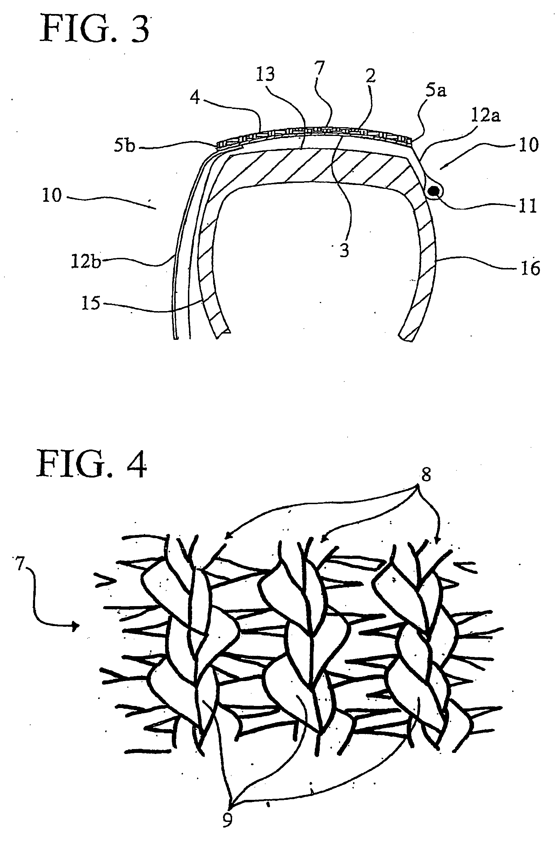

With reference to the mentioned drawings, an antiskid device for vehicles according to the invention is integrally shown by numeral 1. Such device 1 includes a band 2, carried out with fabric 7, suitable for surrounding at least the tread 13 of a vehicle tire and mounting means 10 associated with the band 2 in order to maintain it in position around the tread 13 and for tightening the device 1 itself on the wheel 14 of the vehicle on which it is mounted, so as to prevent unintentional disengaments. The device 1 includes the band 2 which presents engagement means 8 in correspondence with at least a portion of an outer surface 4 thereof for increasing the friction between the tire and the road. In particular, such engagement means 8 are carried out through the same fabric 7 of the band 2. In fact, the engagement means 8 include relief ribbings 9, diagrammatically shown in figure 4, arranged according an angle lower than 30° with respect to the direction perpendicular to the rolling direction of the wheel 14. In a preferred embodiment of the device 1, shown in figures 1 and 2, such ribbings 9 are substantially perpendicular to the rolling direction of the wheel 14. More particularly, an inclination of the ribbings 9 different from the perpendicular one can provide a greater side stability to the vehicle, a self-containment effect of the device 1 which is pushed by the force transmitted between tread 13 and pavement towards the interior of the wheel 14 and a lower noisiness, due to the progressive contact of the ribbings 9 with the ground. However, the inclination must not exceed 30° for not reducing in an inefficient way the adhesion to the ground during the running. Furthermore, the fabric 7 is carried out such that it presents a thickness of at least 0.3 mm with ribbings 9 having a relief of at least 0.8 mm relative to the outer surface 4 of the fabric 7 itself.

In this way, the antiskid action is exerted not only by adhesion, as in the traditional applications with flat fabrics, but also because of the positive force derived from the penetration of the ribbings 9 in the road-bed consisting of, for example, snow, ice, mud or sand. For the purpose of ensuring an adequate action effectiveness, the yarn used for the fabric 7 of the band 2 must have a remarkable friction and wear resistance, resist to low temperatures without getting brittle, it must not absorb water nor modify its features or damage itself with the humidity. For this reason, the synthetic fibers are more suitable, as the natural fibers, for example, can rot following to a prolonged contact with the water.

Preferably, therefore, the fabric 7 is obtained with a continuous multifilament polypropylene yarn with a fineness of 800-1200 dTex, which joins the advantages of the lightness and the ecological compatibility in all the steps of the life cycle of the product (production, processing, disposal).

Furthermore, in order to increase the resistance of the manufactured article, yarns made of high resistance materials, such as aramide resins (kevlar) or textile steel, can be introduced in the zones with a higher stress, such as the ribbings 9.

Advantageously, the fabric 7 suitable for forming the band 2 of the device 1 can be obtained with a rectilinear needle loom, with a "raschel"-type linear textile machine or with a circular textile machine. A preferred embodiment of the device 1 foresees a fabric, 7 carried out through a "raschel"-type linear textile machine with a non-run "tricot" interlacement with a throwing on multiple needles, on a loom with 2 or more bars of 6 needless/1", using a multifilament continuous polypropylene yarn with a fineness 1111 dTex. In this case, the obtained fabric 7 has a weight of 500 g/m <2>with 7 small chains/1" and 6 lacings/cm and, as above described, a thickness of about 0.4 in the "valleys" and about 1.5 mm on the "crests" consisting of the ribbings 9.

Advantageously, the fabric 7 can also be opportunely thermally stabilized (for example through a passage in a tenter frame) in order to make easier the following cutting and sewing operations required for carrying out the band 2.

Furthermore, the band 2 of the device 1 can include grasp means (not shown) in correspondence with at least a portion of an internal surface 3 thereof (namely directly contacting the tread 13 of the tire) for increasing the friction between the device 1 and the tire.

In particular, such grasp means can include relief elements directly carried out on the fabric 7.

In the various embodiments of the inventive concept described, the band 2 can show both a cylindrical and a conical sections. By carrying out a band 2 with a slightly conical instead of a cylindrical section, the device 1 becomes suitable for a wider range of tires so as to reduce the number of sizes required for satisfying the market.

Moreover, if the band 2 of the tread 13 is cylindrical, the device 1 can advantageously be carried out by means of a circular textile machine in a single piece without seams.

Both in case of a cylindrical and a conical sections, the portion of band 2 placed in correspondence with the outer side surface 15 of the wheel 14 (or the one opposite to the connections with the other vehicle elements) can be closed, so as to cover such surface 15.

Always according to the invention, the mounting means 10 include a mounting element 11, generally a resilient element, associated with at least one of the two side portions 5a, 5b of the band 2 so as to maintain the device 1 in position on the tread 13. Alternatively, such mounting element 11 can include a semirigid cable, which can be closed, made of a metal, plastic material or with the fabric 7.

In a first embodiment, therefore, the device 1 consists of a single band 2, obtained with a fabric 7 having the features above described, which can be removably housed and fixed around the tread 13 of the tire by means of the mentioned mounting element 11 which can be associated both with the inner side portion 5a and with the outer one 5b of the band 2 or only with the inner portion 5a if the outer one 5b is closed for covering the outer side surface 15 of the wheel 14 itself.

In a second embodiment of the device 1, preferred to the first one and shown in the figures, the mounting means 11 can include, moreover, at least a flexible side belt 12a, 12b interposed between the side portion 5a, 5b of the band 2, to which it is preferably sewn and the mounting element 11. In this case, the device 1 can show, in a first embodiment, two flexible side belts 12a, 12b, one associated with the inner side portion 5a and the other one to the outer one 5b of the band 2, which end with the mounting means 10. Alternatively, in a second embodiment, the outer side belt 12b can be closed so as to cover the outer side surface 15 of the wheel 14 and the mounting element 11 is only associated with the inner side belt 12a (figures 1, 2 and 3).

Having a closed outer side belt 12b or a closed outer side portion 5b, in case the device 1 is only formed by a band 2 and mounting means 10, it is advantageous for the safety of the device 1 as the partial disengament of the band 2 from the tread 13 towards the inner part of the wheel 14, which dangerously reduces the steering or braking ability of the vehicle, is prevented.

Moreover, in this latter case, the outer side belt 12b (or the outer side portion 5b) can show at least an opening for avoiding the swelling of the device 1 during the running which, for example, can create forces which move the same from the optimal position (alternative not shown).

In its preferred embodiment, the device 1 can advantageously include one or more bands 6 arranged in correspondence with two points substantially placed at 180° of at least one of the side portions 5a, 5b of the band 2 for facilitating the self-centring of the device 1 itself and its removal from the wheel 14. In particular, the preferred embodiment of the device 1 includes two bands 6 sewn at the outer side portion 5b of the band 2, which diametrally cross the outer side surface 15 of the wheel 14, substantially orthogonal therebetween (figure 1).

According to the invention, the band 2 can be closed, being carried out in a single circular piece or being sewn, or open. If the band 2 is open, the device 1 includes means for closing the band 2 during the mounting step around the tread 13 (variation not shown).

Such means can include, for example, a velcro application.

The device 1 of the invention is structured for being easily bent for facilitating the transport and for reducing the encumbrance, considering the restricted spaces within the vehicles.

For the mounting of the preferred embodiment of the device 1 on the wheel 14 of a vehicle, it is necessary to adhere the band 2 to a portion, as wide as possible, of the tread 13 and place the inner side belt 12a and the resilient element in correspondence with a portion of the inner side surface 16 of the wheel 14.

Subsequently, it is necessary to remove the vehicle such that the wheel 14 substantially performs half turn, for being able to house the remaining part of the band 2 and the inner side belt 12a on the portion of the tread 13 which, in the previous step, was contacting the road-bed.

The invention attains important advantages.

First of all, the action of the device of increasing the adhesion with the ground results very effective, even without the help of coatings of the band with other materials, moreover very expensive, as in the traditional applications. In fact, the antiskid action is exerted not only for the higher adhesion of the band fabric relative to the tread compound, as in the known devices carried out with flat fabrics, but also for the positive thrust derived from the penetration of the ribbings in the road-bed. Furthermore, the particular structure of the band fabric, above all when the ribbings are slanted with respect to the direction perpendicular to the rolling direction of the wheel, imparts to the vehicle a greater side stability to the side skipping, a high driving comfort and a lower noisiness due to the progressive contact of the ribbings with the ground.

A further advantage is that the device shows a remarkable wear resistance and, accordingly, a remarkable service life. This is due to the natural elasticity of the knitted fabric used, which further involves a best adaptation of the device to the tire shape, reducing the formation of wrinkles and crimps on the rolling surface during the running of the vehicle.

Another advantage is the easiness of bending the device on its own, which facilitates the transport and the placing in the vehicle, and the simplicity of use. This latter feature is very important above all in winter conditions with severe temperatures.

The advantages above described point out how a device according to the invention can represent a good alternative to the traditional snow chains.

## Claims

1. Antiskid device (1) for vehicles including:
a band (2) suitable for surrounding at least the tread (13) of a vehicle tire, made of fabric (7) and mounting means (10) associated with said band (2) suitable for maintaining said band (2) in position around said tread (13) and for tightening said device (1) on a wheel (14) of said vehicle for preventing unintentional disengagements;
said band (2) presenting engagement means (8) in correspondence with at least a portion of an outer surface (4) of said band (2) itself for increasing the friction between said tire and a road,
wherein said engagement means (8) are carried out through said fabric (7) of said band (2) and wherein said engagement means (8) include relief ribbings (9) arranged according to an angle lower than 30° with respect to a direction perpendicular to a rolling direction of said wheel (14),
**characterized in that** said fabric (7) is a knitted fabric, and wherein said fabric (7) presents a thickness of at least 0.3 mm and said ribbings (9) present a relief of at least 0.8 mm with respect to said outer surface (4) of said fabric (7).

2. Device (1) according to claim 1, **characterized in that** said ribbings (9) are arranged substantially perpendicular to said rolling direction of said wheel (14).

3. Device (1) according to any one of the preceding claims, **characterized in that** said fabric (7) is obtained with a rectilinear needle loom.

4. Device (1) according to any one of the claims 1 to 2, **characterized in that** said fabric (7) is obtained with a "raschel"-type linear textile machine.

5. Device (1) according to any of the preceding claims, wherein the structure of said fabric (7) is apt to impart to the vehicle a greater side stability to the side skipping.

6. Device (1) according to any one of the preceding claims, **characterized in that** said fabric (7) is made of high resistance yarn.

7. Device (1) according to claim 6, **characterized in that** said fabric (7) is made of 800-1200 dTex polypropylene yarn.

8. Device (1) according to claim 7, wherein said yarn is a continuous multifilament yarn.

9. Device (1) according to claims 7 or 8 **characterized in that** at least a portion of said fabric (7) includes aramide resins or textile steel yarns.

10. Device (1) according to any one of the preceding claims, **characterized in that** said fabric (7) is thermally stabilized in order to facilitate cutting and sewing operations for carrying out said band (2).

11. Device (1) according to any one of the preceding claims, **characterized in that** said band (2) presents grasp means in correspondence with at least a portion thereof of an internal surface (3) for increasing the friction between said band (2) and said tire.

12. Device (1) according to claim 11, **characterized in that** said grasp means include relief elements which are directly carried out on said fabric (7).

13. Device (1) according to any one of the preceding claims, **characterized in that** said band (2) presents a cylindrical section.

14. Device (1) according to any one of the claims 1 to 12, **characterized in that** said band (2) presents a conical section.

15. Device (1) according to any one of the preceding claims, **characterized in that** said mounting means (10) include a mounting element (11) associated with at least a side portion (5a, 5b) of said band (2) for maintaining said device (1) in position on said tread (13), said mounting element (11) including a resilient element.

16. Device (1) according to claim 15, **characterized in that** it includes two flexible side belts (12a, 12b) respectively associated with an inner side portion (5a) and an outer side portion (5b) of said band (2) to each of which one of said mounting elements (11) is associated.

17. Device (1) according to claim 15, **characterized in that** it includes an inner side belt (12a) associated with said inner side portion (5a) of said band (2), said inner side belt (12a) being interposed between said band (2) and said mounting element (11) and an outer side belt (12b), associated with said outer side portion (5b) of said band (2), said outer side belt (12b) being closed so as to cover said outer side surface (15) of said wheel (14).

18. Device (1) according to any one of the claims 1 to 17, **characterized in that** said band (2) is open and **in that** said device (1) includes means for closing said band (2) around said tread (13) in the mounting step of said device (1) on said wheel (14).

## Patentansprüche

1. Gleitschutzvorrichtung (1) für Fahrzeuge, umfassend:
ein Band (2), das geeignet ist, mindestens die Lauffläche (13) eines Fahrzeugsreifens umzuwickeln, bestehend aus Gewebe (7) und Montagemittel (10), die mit dem benannten Band (2) verbunden sind und geeignet sind, um das benannte Band (2) in Position um die benannte Lauffläche (13) aufrechtzuerhalten und die benannte Vorrichtung (1) auf einem Rad (14) des benannten Fahrzeuges zu klemmen, so daß unabsichtliche Abkopplungen vermieden werden können;
wobei das benannte Band (2) Eingriffmittel (8) an mindestens einem Abschnitt einer Außenfläche (4) des benannten Bandes (2) aufweist, um die Reibung zwischen dem benannten Reifen und einer Straße zu steigern, worin die benannten Eingriffmittel (8) durch das benannte Gewebe (7) des benannten Bandes (2) durchgeführt werden, und worin die benannten Eingriff-mittel (8) Reliefrippen (9) umfassen, die mit einem Winkel unter 30° bezüglich einer Richtung orthogonal zu einer Laufrichtung des benannten Rades (14) angeordnet sind, **dadurch gekennzeichnet, daß** das benannte Gewebe (7) ein Strickgewebe ist, und worin das benannte Gewebe (7) eine Dicke von mindestens 0,3 mm aufweist und die benannten Rippen (9) ein Relief von mindestens 0,8 mm bezüglich der benannten Außenfläche (4) des benannten Gewebes (7) aufweisen.

2. Vorrichtung (1) nach Anspruch 1, **dadurch gekennzeichnet, daß** die benannten Rippen (9) wesentlich orthogonal zur benannten Laufrichtung des benannten Rades (14) angeordnet sind.

3. Vorrichtung (1) nach irgendeinem der vorhergehenden Ansprüche, **dadurch gekennzeichnet, daß** das benannte Gewebe (7) mit einem geradlinigen Nadelwebstuhl erhalten wird.

4. Vorrichtung (1) nach irgendeinem der Ansprüche 1 bis 2, **dadurch gekennzeichnet, daß** das benannte Gewebe (7) mit einer linearen Raschel-Textilmaschine erhalten wird.

5. Vorrichtung (1) nach irgendeinem der vorhergehenden Ansprüche, worin die Struktur des benannten Gewebes (7) geeignet ist, dem Fahrzeug eine höhere Seitenstabilität zu Seitenspurwechseln zu verleihen.

6. Vorrichtung (1) nach irgendeinem der vorhergehenden Ansprüche, **dadurch gekennzeichnet, daß** das benannte Gewebe (7) aus hochfestem Garn besteht.

7. Vorrichtung (1) nach Anspruch 6, **dadurch gekennzeichnet, daß** das benannte Gewebe (7) aus Polypropylengarn 800-1200 dTex besteht.

8. Vorrichtung (1) nach Anspruch 7, **dadurch gekennzeichnet, daß** das benannte Garn ein kontinuierlichen Multifilgarn ist.

9. Vorrichtung (1) nach den Ansprüchen 7 oder 8, **dadurch gekennzeichnet, daß** mindestens ein Abschnitt des benannten Gewebes (7) Aramidharze oder Stahltextilgarne umfasst.

10. Vorrichtung (1) nach irgendeinem der vorhergehenden Ansprüche, **dadurch gekennzeichnet, daß** das benannte Gewebe (7) thermisch stabilisiert ist, um die Schneid- und Nähoperationen zur Durchführung des benannten Bandes (2) zu vereinfachen.

11. Vorrichtung (1) nach irgendeinem der vorhergehenden Ansprüche, **dadurch gekennzeichnet, daß** das benannte Band (2) Greifmittel an mindestens einem Abschnitt davon einer Innenfläche (3) aufweist, um die Reibung zwischen dem benannten Band (2) und dem benannten Reifen zu steigern.

12. Vorrichtung (1) nach Anspruch 11, **dadurch gekennzeichnet, daß** die benannten Greifmittel Reliefelemente umfassen, die unmittelbar auf dem benannten Gewebe (7) durchgeführt sind.

13. Vorrichtung (1) nach irgendeinem der vorhergehenden Ansprüche, **dadurch gekennzeichnet, daß** das benannte Band (2) einen zylindrischen Schnitt aufweist.

14. Vorrichtung (1) nach irgendeinem der Ansprüche 1 bis 12, **dadurch gekennzeichnet, daß** das benannte Band (2) einen konischen Schnitt aufweist.

15. Vorrichtung (1) nach irgendeinem der vorhergehenden Ansprüche, **dadurch gekennzeichnet, daß** die benannten Montagemittel (10) ein Montageelement (11) umfassen, das mit mindestens einem Seitenabschnitt (5a, 5b) des benannten Bandes (2) verbunden ist, um die benannte Vorrichtung (1) in Position auf der benannten Lauffläche (13) aufrechtzuerhalten, wobei das benannte Montageelement (11) ein federndes Element umfasst.

16. Vorrichtung (1) nach Anspruch 15, **dadurch gekennzeichnet, daß** sie zwei flexible Seitengurte (12a, 12b) umfasst, die jeweils mit einem Innenseitenabschnitt (5a) und mit einem Außenseitenabschnitt (5b) des benannten Bandes (2) verbunden sind, mit jedem davon ein der benannten Montageelemente (11) verbunden ist.

17. Vorrichtung (1) nach Anspruch 15, **dadurch gekennzeichnet, daß** sie einen Innenseitengurt (12a), der mit dem benannten Innenseitenabschnitt (5a) des benannten Bandes (2) verbunden ist, wobei der benannte Innenseitengurt (12a) sich zwischen dem benannten Band (2) und dem benannten Montageelement (11) befindet, und einen Außenseitengurt (12b), der mit dem benannten Außenseitenabschnitt (5b) des benannten Bandes (2) verbunden ist, umfasst, wobei der benannte Außenseitengurt (12b) geschlossen ist, um die benannte Außenseitenfläche (15) des benannten Rades (14) zu decken.

18. Vorrichtung (1) nach irgendeinem der Ansprüche 1 bis 17, **dadurch gekennzeichnet, daß** das benannte Band (2) offen ist, und daß die benannte Vorrichtung (1) Mittel zum Schließen des benannten Bandes (2) um die benannte Lauffläche (13) während des Montageschrittes der benannten Vorrichtung (1) auf dem benannten Rad (14) umfasst.

## Revendications

1. Dispositif antidérapant (1) pour véhicules, comprenant: une bande (2) apte à entourer au moins la bande de roulement (13) du pneumatique d'un véhicule, en tissu (7) et moyens de montage (10) associés à ladite bande (2) aptes à maintenir ladite bande (2) en position autour de ladite bande de roulement (13) et à serrer ledit dispositif (1) sur une roue (14) dudit véhicule pour éviter des déconnexions involontaires;
ladite bande (2) présentant des moyens d'engagement (8) en correspondance d'au moins une portion d'une surface extérieure (4) de ladite bande (2), pour augmenter le frottement entre ledit pneumatique et une route, où lesdits moyens d'engagement (8) sont réalisés par ledit tissu (7) de ladite bande (2), et où lesdits moyens d'engagement (8) comprennent des côtes en relief (9) disposées selon un angle inférieur à 30° par rapport à une direction perpendiculaire à une direction de roulement de ladite roue (14), **caractérisé en ce que** ledit tissu (7) est un tricot, et où ledit tissu (7) présente une épaisseur d'au moins 0,3 mm et lesdites côtes (9) présentent un relief d'au moins 0,8 mm par rapport à ladite surface extérieure (4) dudit tissu (7).

2. Dispositif (1) selon la revendication 1, **caractérisé en ce que** lesdites côtes (9) sont disposées sensiblement perpendiculaires à ladite direction de roulement de ladite roue (14).

3. Dispositif (1) selon une quelconque des revendications précédentes, **caractérisé en ce que** ledit tissu (7) est obtenu avec un métier à aiguilles rectiligne.

4. Dispositif (1) selon une quelconque des revendications 1 à 2, **caractérisé en ce que** ledit tissu (7) est obtenu avec une machine textile linéaire de type Raschel.

5. Dispositif (1) selon une quelconque des revendications précédentes, où la structure dudit tissu (7) est apte à donner au véhicule une stabilité latérale supérieure aux déplacements latéraux.

6. Dispositif (1) selon une quelconque des revendications précédentes, **caractérisé en ce que** ledit tissu (7) est en fil à haute résistance.

7. Dispositif (1) selon la revendication 6, **caractérisé en ce que** ledit tissu (7) est en fil de polypropylène 800-1200 dTex.

8. Dispositif (1) selon la revendication 7, **caractérisé en ce que** ledit fil est un fil multifilament continu.

9. Dispositif (1) selon les revendication 7 ou 8, **caractérisé en ce que** au moins une portion dudit tissu (7) comprend des résines d'aramide ou des fils d'acier textile.

10. Dispositif (1) selon une quelconque des revendications précédentes, **caractérisé en ce que** ledit tissu (7) est stabilisé du point de vue thermique afin de simplifier les opérations de coupe et de couture pour la réalisation de ladite bande (2).

11. Dispositif (1) selon une quelconque des revendications précédentes, **caractérisé en ce que** ladite bande (2) présente des moyens de saisie en correspondance d'au moins une portion respective d'une surface intérieure (3), pour augmenter le frottement entre ladite bande (2) et ledit pneumatique.

12. Dispositif (1) selon la revendication 11, **caractérisé en ce que** lesdits moyens de saisie comprennent des éléments en relief réalisés directement sur ledit tissu (7).

13. Dispositif (1) selon une quelconque des revendications précédentes, **caractérisé en ce que** ladite bande (2) présente une section cylindrique

14. Dispositif (1) selon une quelconque des revendications 1 à 12, **caractérisé en ce que** ladite bande (2) présente une section conique.

15. Dispositif (1) selon une quelconque des revendications précédentes, **caractérisé en ce que** lesdits moyens de montage (10) comprennent un élément de montage (11) associé à au moins une portion latérale (5a, 5b) de ladite bande (2), pour maintenir ledit dispositif (1) en position sur ladite bande de roulement (13), ledit élément de montage (11) comprenant un élément résilient.

16. Dispositif (1) selon la revendication 15, **caractérisé en ce que** il comprend deux courroies latérales flexibles (12a, 12b), respectivement associées à une portion latérale intérieure (5a) et à une portion latérale extérieure (5b) de ladite bande (2), à chacune desquelles est associé un desdits éléments de montage (11).

17. Dispositif (1) selon la revendication 15, **caractérisé en ce que** il comprend une courroie latérale intérieure (12a) associée à ladite portion latérale intérieure (5a) de ladite bande (2), ladite courroie latérale intérieure (12a) étant placée entre ladite bande (2) et ledit élément de montage (11), et une courroie latérale extérieure (12b) associée à ladite portion latérale extérieure (5b) de ladite bande (2), ladite courroie latérale extérieure (12b) étant fermée afin de couvrir ladite surface latérale extérieure (15) de ladite roue (14).

18. Dispositif (1) selon une quelconque des revendications 1 à 17, **caractérisé en ce que** ladite bande (2) est ouverte, et **en ce que** ledit dispositif (1) comprend des moyens pour fermer ladite bande (2) autour de ladite bande de roulement (13) dans l'étape de montage dudit dispositif (1) sur ladite roue (14).
